Europäisches Patentamt

European Patent Office

Office européen des brevets

(11) Numéro de publication: **0 105 997**
A1

# (12) DEMANDE DE BREVET EUROPEEN

(21) Numéro de dépôt: **82401932.7**

(51) Int. Cl.³: **F 04 D 3/02**

(22) Date de dépôt: **21.10.82**

(30) Priorité: **04.10.82 FR 8216583**

(43) Date de publication de la demande: **25.04.84**
**Bulletin 84/17**

(84) Etats contractants désignés: **AT BE CH DE GB IT LI LU NL SE**

(71) Demandeur: **SOCIETE NOUVELLE GENERALE DE PROMOTION Société Anonyme, 27, rue de Bretagne Z.I. des Béthunes, F-95310 Saint-Ouen L'Aumone Val d'Oise (FR)**

(72) Inventeur: **Aris, Jean, 29, rue François Couperin, F-78730 Plaisir (Yvelines) (FR)**

(74) Mandataire: **Rataboul, Michel, Cabinet Michel Rataboul 69, rue de Richelieu, F-75002 Paris (FR)**

(54) **Procédé et dispositif pour le transfert de liquides par aspiration.**

(57) Le procédé consiste à créer dans un conduit (1) des dépressions élémentaires centrales tout le long de ce conduit (1), afin d'obtenir une dépression résultante axiale continue qui se developpe dans un sens prédéterminé pour qu'il s'ensuive un courant d'aspiration longitudinal central.

Un dispositif pour la mise en œuvre de ce procédé comprend un conduit (1), un élément longitudinal creux (2), tel qu'un fil conformé en spirale, et un moteur (4) qui entraîne l'élément (2) à grande vitesse (de l'ordre de 10.000 tours/minute).

L'élément (2) n'est pas un organe d'entraînement ni un convoyeur. Il agit sur l'air pour donner naissance à la dépression, laquelle aspire le liquide à transférer.

Applications principales: vidange des moteurs par le haut du carter, débouchage des conduites d'immeubles accidentellement obturées.

0105997

# PROCEDE ET DISPOSITIF POUR LE TRANSFERT DE LIQUIDES
## PAR ASPIRATION

Pour mettre un liquide en circulation on utilise des pompes qui agissent soit mécaniquement, soit par dépression.

Pour transférer un liquide relativement lourd et visqueux surtout lorsqu'il faut l'élever, les pompes aspirantes doivent être très puissantes et ne peuvent, par conséquent, être réalisées que sous forme d'engins lourds, peu maniables lorsqu' ils ne sont pas complètement inamovibles.

Les pompes qui agissent mécaniquement doivent se trouver à proximité immédiate du liquide à transférer puisque l'élément mécanique de mise en mouvement doit être plongé dans le liquide.

Lorsque la pompe doit rester à distance du liquide à transférer, on ne peut utiliser que des principes mécaniques très particuliers qui conduisent parfois à des solutions compliquées ou onéreuses.

De toutes façons, pour certaines applications impliquant le déplacement de liquides, les solutions connues sont souvent tout à fait inefficaces.

C'est ainsi que l'on connaît le principe selon lequel une vis sans fin est montée rotative à l'intérieur d'un conduit.

Cette vis sans fin constitue un organe d'entraînement ou "convoyeur", qui effectue le transfert par action mécanique de poussée sur le liquide.

Ce principe est connu depuis la plus haute antiquité puisqu'il était utilisé pour élever l'eau depuis une rivière jusqu'à des canaux d'irrigation.

Des perfectionnements ont, bien entendu, été apportés à ce principe de base, notamment en prévoyant que le conduit est souple et la vis sans fin flexible.

Un tel dispositif est décrit, par exemple, dans la demande française n°81/07580, dans le brevet français 1.310.620 et dans le brevet U.S. 4.202.438.

Dans ces trois documents le matériau à transférer est mis en mouvement par un organe d'entraînement "positif".

On note, par exemple, que dans le brevet des Etats Unis d'Amérique 4.202.438, colonne 3 à partir de la ligne 48, l'élément hélicoïdal est constitué par un fil, mais celui-ci doit obligatoirement comporter de place en place des sortes d'ailettes 10 qui assurent la mise en mouvement.

Il est clair que si l'on utilise une vis sans fin comme organe mécanique d'entraînement, le débit du dispositif est une fonction directe de la vitesse à laquelle cet organe d'entraînement est maintenu en rotation par le moteur.

Les vitesses de rotation admissibles vont de zéro tour par minute à quelques centaines de tours par minute, au maximum, pour un débit donné.

La limite de la vitesse de rotation se situe, on le voit, dans une fourchette très ouverte qui n'a pratiquement pas de minimum.

On connait également le brevet français 1.436.336 (correspondant au brevet des Etats-Unis d'Amérique 3.381.801) qui prévoit deux parties cylindriques concentriques déterminant un espace annulaire dans lequel un hélicoïde est entraîné en rotation pour assurer le transport du fluide.

Selon le déposant de ces brevets, le transport mécanique dû à l'hélicoïde est accompagné d'une turbulence pneumatique fluidifiant la substance transportée et accélérant son écoulement, grâce au fait que la partie tubulaire interne diminue le volume axial de la substance et la soumet dans un espace réduit aux effets des spires.

Ce dispositif ne comporte donc pas de partie centrale, la substance se déplaçant dans l'espace annulaire compris entre le conduit cylindrique extérieur et la partie cylindrique (éventuellement pleine) intérieure.

La présente invention diffère complètement de ces dispositifs antérieurs connus en assurant le transfert d'un liquide non plus par action physique d'un organe d'entraînement mais au moyen d'une dépression établie tout le long du conduit par lequel le liquide transite depuis la capacité dans laquelle il se trouve jusqu'à un orifice de sortie.

A cette fin, l'invention a pour objet un procédé pour le transfert de liquides par aspiration dans un conduit contenant, au début de l'utilisation, de l'air à la pression atmosphérique, caractérisé en ce que l'on crée à l'intérieur du conduit une force répartie sur toute sa longueur en vue de donner naissance à des dépressions élémentaires centrales tout le long du
conduit, qui procurent une dépression résultante axiale continue, et que l'on imprime un sens à cette dépression résultante
pour qu'il s'ensuive un courant d'aspiration longitudinal central.

L'invention a également pour objet un dispositif destiné
à la mise en oeuvre du procédé ci-dessus, caractérisé en ce
qu'il comprend un conduit dans lequel s'étend un élément longitudinal creux dont la partie centrale est entièrement dégagée,
qui est relié à un moteur de mise en mouvement et qui comprend une pluralité d'organes répartis régulièrement sur toute
sa longueur et aptes, lorsque l'élément est en mouvement, à
exercer sur l'air contenu dans le conduit, chacun à son niveau,
une force devant se traduire dans la partie centrale dégagée
de l'élément creux par une dépression longitudinale, orientée
de l'extrémité du conduit opposée au moteur vers un orifice
de sortie proche dudit moteur.

Selon d'autres caractéristiques de l'invention :

- l'élément longitudinal creux a une longueur très sensiblement égale à
celle du conduit et un diamètre extérieur plus petit que le diamètre
intérieur du conduit afin de ménager un espace annulaire parallèle à
la partie centrale dégagée.

- Le diamètre intérieur du conduit, les diamètres extérieur et intérieur
de l'élément ainsi que la vitesse à laquelle ledit élément doit être
maintenu en mouvement sont liés par une relation procurant une dépression
longitudinale dont la valeur est établie pour pouvoir élever un liquide
donné, selon un débit significatif, depuis l'extrémité du conduit opposée
au moteur jusqu'à l'orifice de sortie, alors que le conduit est placé
verticalement.

- la relation est la suivantes :

. diamètre intérieur du conduit ..................... 1
. diamètre extérieur de l'élément ................... 0,8 à 0,9
. diamètre intérieur de l'élément ................... 0,5 à 0,62
. vitesse en cycles par minute .......................12.000$\pm$ 6%

pour élever verticalement d'à peu près un mètre, avec un débit d'environ
0,5l/minute, selon sa température, un liquide de viscosité et de masse volumique du type des lubrifiants pour moteurs et machines.

- l'élément longitudinal creux est constitué par un fil à section circulaire conformé en spirale cylindrique dont les spires constituent chacune l'un des organes répartis régulièrement sur toute la longueur de cet élément, le mouvement du moteur étant une rotation continue.

- l'élément conformé en spirale cylindrique comprend au moins deux ensembles séparés mais reliés par un segment rectiligne axial.

- le dispositif devant être maintenu à un emplacement fixe par rapport à la capacité contenant le liquide à transférer, ce dispositif conporte un support muni d'un premier organe pour son assujettissement à la capacité et d'un second organe de soutien du dispositif, ce second organe étant monté mobile par rapport au support afin que la position du dispositif soit réglable, des moyens de tout type connu étant prévus pour immobiliser ce second organe dans la position voulue.

- le premier organe est constitué par une pince élastique susceptible de coopérer avec une collerette co-axiale d'un orifice de la capacité par lequel le conduit du dispositif doit être introduit dans cette capacité.

- la collerette est constituée par une extrémité d'un embout tubulaire indépendant devant être engagé de manière amovible par son autre extrémité dans l'orifice de la capacité.

Les moyens qui font l'objet de la présente invention seront mieux compris par la description détaillée ci-après faite en référence au dessin annexé. Bien entendu, la description et le dessin ne sont donnés qu'à titre d'exemple indicatif et non limitatif.

La figure 1 est une vue schématique en coupe montrant un dispositif conforme à l'invention.

Les figures 2 et 3 sont des vues schématiques respectivement en coupe transversale et en coupe longitudinale d'un conduit équipant un dispositif conforme à l'invention et qui montrent graphiquement les paramètres auxquels sont soumis les moyens conformes à l'invention.

La figure 4 illustre une caractéristique de fonctionnement d'un dispositif conforme à l'invention.

La figure 5 montre schématiquement un dispositif conforme à l'invention mis en place sur un moteur à combustion interne en vue de l'extraction de l'huile usée hors de son carter.

La figure 6 est une vue schématique partielle montrant un détail de réalisation.

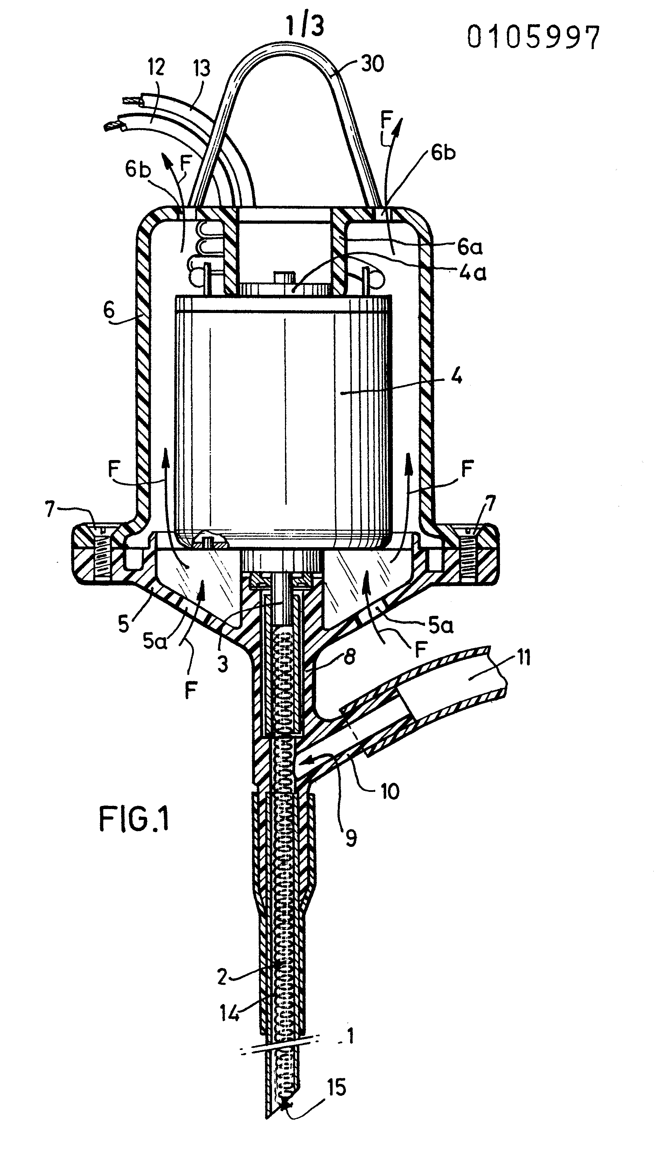

En se reportant aux figures 1 à 3, on voit qu'un dispositif conforme à l'invention comprend un conduit 1 dans lequel est placé un élément rotatif 2 constitué par un fil conformé en hélice et relié à l'arbre de sortie 3 d'un moteur électrique 4 maintenu en place par la coopération d'un socle 5 et d'un capot 6 associés par des vis 7.

Le socle 5 est solidaire d'un embout 8 présentant un orifice de sortie 9 qui est, ici, prolongé par un embout oblique 10 sur lequel est engagé à force un tuyau souple 11.

Le moteur électrique 4 est alimenté par deux fils 12 et 13 devant être reliés à une source de courant électrique telle qu'une batterie d'accumulateur ou une prise de courant d'une installation fixe.

Le moteur 4 est choisi pour entraîner l'élément 2 en rotation, à plusieurs milliers de tours par minute.

A cet effet, l'élément 2 peut être relié, comme représenté, directement à l'arbre de sortie 3 lorsque la vitesse de fonctionnement du moteur 4 correspond à celle que l'on veut imprimer à l'élément 2 ou bien peut être associé à un dispositif de tout type connu donnant à l'élément un nombre de tours différent de celui du moteur 4.

La vitesse de rotation de l'élément 2 est un élément critique qui dépend, comme on le verra ci-après, non seulement des caractéristiques physiques (viscosité, masse volumique etc..) du liquide à transférer, mais également des dimensions intérieures du conduit 1 et des caractéristiques géométriques de l'élément 2.

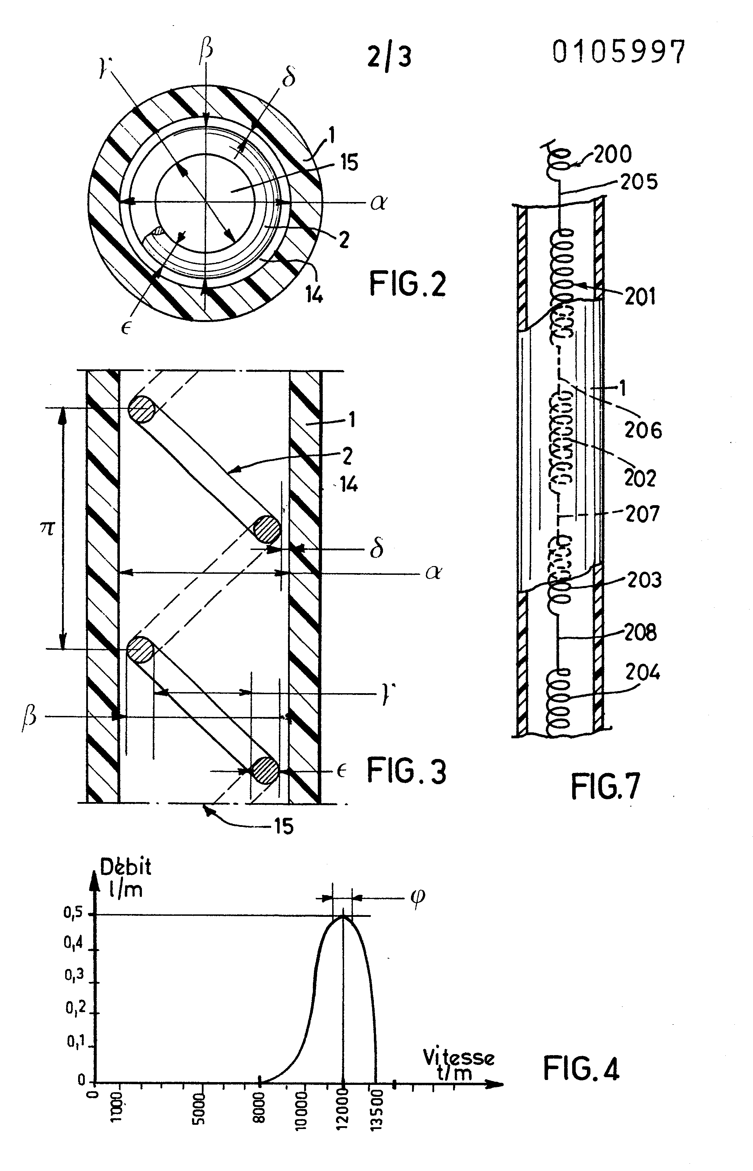

Ainsi, en se référant aux figures 2 et 3, on voit un exemple de réalisation selon lequel l'invention est appliquée à un dispositif permettant l'extraction de l'huile usée d'un carter de moteur par l'orifice supérieur de ce carter qui est prévu pour recevoir la jauge amovible habituelle.

Pour cette application, le conduit 1 est en matière synthétique souple tandis que l'élément 2 est réalisé en métal afin de constituer une sorte de mandrin flexible

- 6 -

0105997

latéralement mais relativement rigide dans le sens longitudinal afin de constituer une sorte de palpeur permettant de déterminer l'enfoncement de l'ensemble dans une capacité dont on ne voit pas le fond, ce qui est précisément le cas des carters de moteurs ou de machines.

Les éléments liés par une relation précise sont le diamètre intérieur $\alpha$ du conduit 1 (son diamètre extérieur n'a aucune importance fonctionnelle et n'est déterminé que selon des considérations de tenue mécanique), les diamètres extérieur $\beta$ et intérieur $\gamma$ de l'élément 2 d'où l'on tire la valeur $\delta$ d'un espace annulaire 14 et l'épaisseur $\epsilon$ du fil avec lequel l'élément 2 est obtenu.

Le diamètre intérieur $\gamma$ est représentatif d'une partie centrale 15 qui est entièrement dégagée et constituée par l'intérieur de la spirale que forme le fil constitutif de l'élément 2.

Lorsque l'invention est appliquée à la réalisation d'un dispositif destiné à effectuer les vidanges des carters de moteurs par extraction de l'huile usée non pas par une ouverture inférieure mais "par le haut" et notamment par le puits de jauge, les dimensions des paramètres ci-dessus sont avantageusement les suivantes :

- $\alpha$ ........................................... 4,1 mm
- $\beta$ ........................................... 3,6 mm
- $\gamma$ ........................................... 2,4 mm

d'où :

- $\delta$ ........................................... 0,25 mm
- $\epsilon$ ........................................... 0,6  mm.

Pour l'entraînement de l'élément 2 en rotation continue, on utilise un moteur qui tourne, à vide, à 15.000 tours/minute et à 12.000 lorqu'il est en charge et cela à 5 ou 6% près seulement.

Au démarrage, le conduit 1 contient de l'air à la pression atmosphérique et le moteur 4 est lancé à 15.000 tours/minute pendant un temps très court car il entraîne en rotation l'élément 2 à la même vitesse et les spires de l'élément constituent des organes répartis régulièrement sur toute sa longueur, organes qui exercent sur l'air contenu dans le conduit 1 une force qui donne naissance à des dépressions élémentaires dans la partie centrale entièrement dégagée 15, tout le long du conduit 1, ce qui procure une dépression résultante longitudinale continue.

Le choix d'une spirale pour constituer l'élément creux 2 a pour avantage supplémentaire de donner automatiquement un sens à la dépression résultante pour qu'il s'ensuive un courant d'aspiration orienté de l'extrémité libre du conduit 1 vers l'orifice de sortie 9.

Comme le transfert du liquide s'effectue par la dépression et non pas par action mécanique, la valeur $\P$ du pas s'établit à une valeur qui n'a pas une importance aussi aigue que celle des paramètres précédents.

En effet, si le sens de rotation de la spirale a une importance capitale, le pas est seulement indicatif du sens de déplacement et sa valeur $\P$ se calcule donc dans une fourchette beaucoup plus large sans toutefois être indifférente, notamment selon le liquide à transférer.

A cet égard, il faut souligner que le transfert du liquide, comme on l'a dit, s'opère par dépression, mais, naturellement, les spires apportent une certaine contribution à ce transfert, par effet mécanique direct, de sorte que l'on peut admettre que la valeur $\P$ est d'autant plus faible que le liquide à transporter est lourd et, corrélativement, la valeur $\P$ peut être d'autant plus grande que le liquide est léger et peu visqueux comme c'est le cas de l'eau.

La relation qui existe entre les diamètres $\alpha$, $\beta$ et $\gamma$ et la vitesse de rotation, conduit à déterminer une nouvelle valeur des diamètres $\beta$ et $\gamma$ et de la vitesse si l'on modifie la valeur du diamètre $\alpha$, c'est à dire le diamètre intérieur du conduit 1.

On constate expérimentalement que la valeur de la vitesse s'inscrit dans une fourchette extrêmement étroite car, en faisant varier cette vitesse, on constate que, au-dessous d'une certaine valeur, le débit reste nul puis qu'il atteint très rapidement une valeur donnée puis
qu'en augmentant encore la vitesse ce débit tombe très
brusquement à zéro.

Ce phénomène est illustré par la figure 4 qui
représente la variation du débit en fonction de la
vitesse d'un moteur pour un dispositif ayant les valeurs
indiquées plus haut.

On constate que de 0 à 8.000 tours/minute le
débit est nul puis qu'en augmentant encore la vitesse,
le débit augmente très rapidement jusqu'à atteindre la
valeur maximum de 0,5 litre/minute pour 12.000 tours/
minute. Lorsqu'on augmente encore la vitesse, on voit
que le débit diminue presque instantanément et retrouve
une valeur nulle dès que la vitesse atteint 13 500 tours.

On voit, ainsi, que la mise en oeuvre de
l'invention est tout à fait différente de celle qui
préside au fonctionnement des dispositifs connus antérieurement et qui utilisent un élément hélicoïdal comme
organe d'entraînement physique du produit à transférer.

En effet, il est clair que si l'on utilise un
élément hélicoïdal comme organe d'entraînement mécanique, le
débit est sensiblement une fonction directe de la vitesse
de sorte que si celle-ci a une valeur extrêmement faible
il en résulte encore un certain débit, une limite n'apparaissant que pour les valeurs supérieures et provenant
essentiellement de la géométrie du dispositif, notamment
dans la zone proche du moteur et en considérant tout
particulièrement les dimensions de l'orifice de sortie
et l'inclinaison du conduit d'évacuation.

En observant la courbe de la figure 4, on
constate que la valeur théorique maximum est de 0,5 litre/
minute pour une vitesse de 12.000 tours minute mais, dans
la pratique, la vitesse s'inscrit dans une fourchette $\varphi$
qui s'étend, à peu près de 11.500 à 12.500 tours/minute.

Le débit obtenu est la manisfestation visible
de la dépression. Or, si le débit varie selon le liquide
mis en mouvement, la dépression a, quant à elle, une valeur qui est établie par construction en tenant compte des paramètres indiqués ci-dessus.

Pour établir cette dépression, on doit prendre en compte les caractéristiques du liquide le plus visqueux et/ou le plus lourd avec lequel on doit utiliser le dispositif. En effet, tous les liquides plus légers ou moins visqueux seront tranférés avec un débit supérieur.

Comme on l'a dit plus haut, le diamètre extérieur du conduit 1 peut être choisi plus librement que les autres diamètres dont la valeur est critique. Lorsque le dispositif est utilisé pour la vidange des moteurs par le puits de jauge, il est clair que le diamètre extérieur du conduit 1 ne peut pas être quelconque puisqu'il est destiné à être introduit par ce puits de jauge. Comme l'épaisseur des parois du conduit 1 ne peut pas non plus être complètement indifférente puisqu'elle dépend du matériau utilisé, le diamètre intérieur $\alpha$ peut être imposé à quelques dixièmes de milimètres près.

Dans ces conditions, la détermination des autres paramètres conduit à une dépression maximum donnée qui a pour conséquence un débit donné qu'il n'est pas possible de dépasser pour le liquide considéré.

Néanmoins, il est clair que l'on a intérêt à obtenir un débit maximum c'est à dire à utiliser une épaisseur minimum pour le conduit 2 en vue d'obtenir un diamètre intérieur $\alpha$ le plus grand possible.

Mais, alors, lorsque l'on utilise un matériau souple, le conduit est extrêmement flexible surtout lorsqu'il est utilisé pour la vidange d'une huile encore chaude, c'est à dire à 80° environ car la température ramollit les matières synthétiques utilisables.

Si l'on utilisait une matière synthétique pour constituer l'élément longitudinal creux 2 celui-ci serait lui-même ramolli et déformé.

Ainsi, au moment de la mise en place de l'ensemble dans le puits de jauge, le conduit 1 et l'élément longitudinal 2 au lieu de rester à peu près droits au contact du fond du carter, se soulèveraient . et l'extrémité du conduit 1 pourrait se trouver au-dessus du niveau d'huile,de sorte qu'aucune extraction ne pourrait se produire ou, pire encore, l'utilisateur pourrait penser que la vidange est finie alors qu'il ne s'agirait que d'une interruption survenant après un début d'extraction correct(quand le conduit 1 et l'élément longitudinal 2 n'étaient pas encore déformés).

Le choix d'un métal sensiblement indéformable à la température d'utilisation est donc doublement important puisque cette indéformabilité et cette relative rigidité permettent non seulement d'informer l'utilisateur que l'extrémité libre du conduit 1 atteint le fond du carter mais procure aussi la garantie que le conduit 1 et l'élément 2 ne se déplaceront pas d'eux-mêmes.

On comprend qu'un dispositif ne mette en oeuvre correctement le procédé conforme à l'invention que si l'extrémité libre du conduit 1 est maintenue immobile au niveau le plus bas possible.

Pour cela, le repère le plus perceptible est de placer cette extrémité libre contre le fond de la capacité et de s'assurer qu'elle ne remontera pas accidentellement.

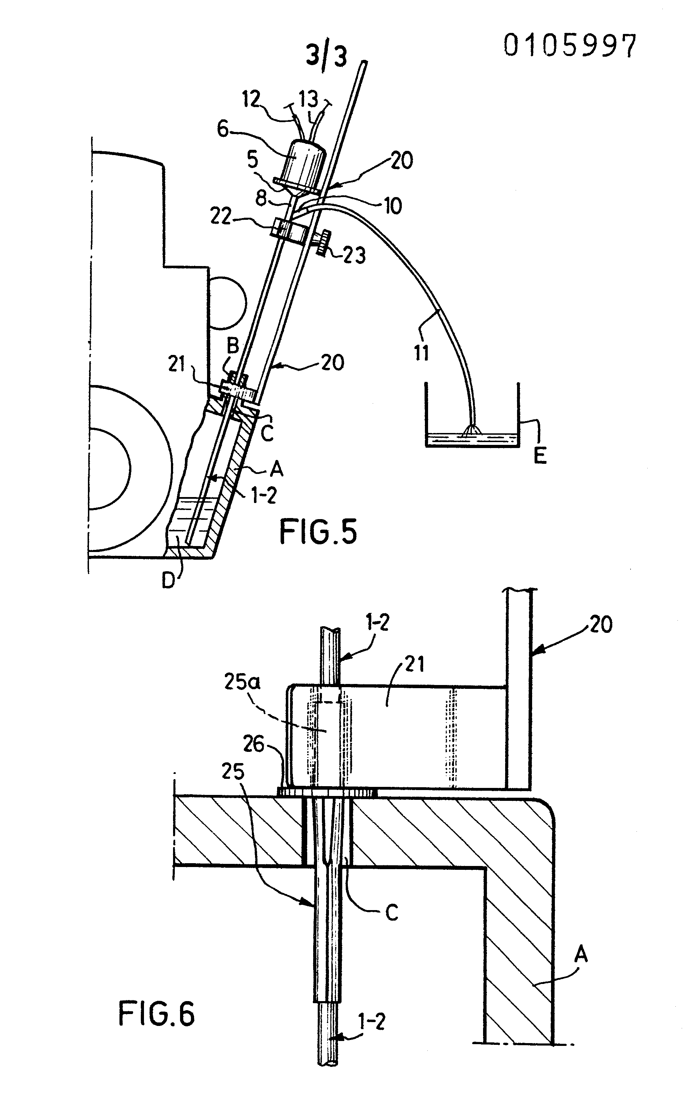

C'est pourquoi, selon l'invention, on prévoit un support de préférence amovible ainsi que cela est représenté sur les figures 5 et 6.

Sur la figure 5, on voit qu'un support 20 comprend un premier organe 21 pour son assujetissement à un carter de moteur A et un second organe 22 pour soutenir le dispositif lui-même.

L'organe 21 est de préférence constitué par une pince élastique connue en soi et destinée à coopérer avec une collerette B que comporte d'origine le carter A autour de l'orifice C par lequel on engage le conduit 1 à la place de la jauge habituelle.

Le second organe 22 est avantageusement constitué aussi par une pince élastique qui se place le plus près possible du socle  5 et qui est montée mobile par rapport au support 20.

Ici, la pince 22 est associée à un boulon (non visible sur le dessin) engagée dans une lumière longitudinale du support 20 et coopérant avec un écrou de blocage 23.

La mise en place se fait de la manière suivante: après avoir retiré la jauge, on engage le conduit 1 contenant l'élément 2 dans le puits de jauge puis l'on force la pince 21 sur la collerette B pour que le support 20 soit immobilisé et, lorsque cela est obtenu, on met en place la pince 22 qui se trouve ainsi rendue solidaire du dispositif, alors que l'écrou 23 est desserré, de sorte que l'on peut faire descendre ensemble le dispositif (et donc le conduit 1 contenant l'élément 2) et la pince 22 le long du support 20 jusqu'à ce que l'on sente que l'extrémité libre du conduit 1 atteint le fond du carter A.

A ce moment, on bloque l'écrou 23 et l'ensemble reste immobile en bonne position sans intervention de l'usager.

Ce dernier peut alors mettre en route le moteur 4 en assurant son alimentation par les fils 12 et 13 ce qui a pour conséquence, comme on l'a expliqué ci-dessus, de provoquer l'aspiration de l'huile D située dans le carter A, laquelle remonte dans le conduit 1, atteint l'orifice de sortie 9 et, par l'embout 10 est évacuée au moyen du tuyau 11 jusque dans un réceptacle E.

Parfois, certains puits de jauge ne possèdent pas de collerette B et, alors, le carter A se présente avec un simple orifice C ainsi que cela est représenté sur la figure 6.

Pour être sûr que le dispositif peut être maintenu en place au moyen du support 20 dans tous les cas et même lorsqu'il n'y a pas de collerette B, on prévoit un embout tubulaire 25 qui est engagé en partie seulement dans l'orifice C afin qu'il dépasse à l'extérieur du carter A, de sorte que cette partie dépassante 25a constitue un point d'appui pour la pince 21.

Afin de limiter l'enfoncement de l'embout 25

- 12 -

0105997

dans l'orifice C et pour empêcher qu'il puisse accidentellement tomber à l'intérieur du carter A, l'embout 25 comprend une rondelle 26 constituant une butée qui doit avoir une largeur suffisante pour jouer son rôle quel que soit le diamètre de l'orifice C.

Avec ces dispositions, on commence par retirer la jauge habituelle puis à mettre en place l'embout 25, après quoi on agit comme indiqué ci-dessus.

On pourrait remplacer le support 20 par tout autre moyen permettant d'assurer l'immobilisation de l'extrémité du conduit 1 par rapport au fond de la capacité dont on veut extraire un liquide.

On pourrait, notamment, prévoir une anse 30 (figure 1) que l'on peut suspendre à un crochet tel qu'un esse ou un crochet solidaire d'une embase magnétique par exemple.

En se reportant maintenant à la figure 7, on voit une variante de réalisation selon laquelle l'élément longitudinal creux est encore du type spirale cylindrique, mais comprend des ensembles 200, 201, 202, 203, 204 qui sont séparés par des espaces libres mais qui sont reliés par des segments de fil rectilignes axiaux 205, 206, 207, 208. Dans la pratique tout est obtenu avec un fil à section circulaire, en une seule pièce.

Avec cette variante, chaque ensemble en spirale 200, 201, etc... présente toujours une partie centrale entièrement dégagée puisqu'il est exactement constitué comme l'élément 2 précédemment décrit.

Là où se trouve un segment axial 205, 206 etc..., un espace sans spirale constitue une chambre de plus grand volume et le tout favorise la vitesse d'écoulement du liquide et, donc, le débit par une aspiration étagée et, en quelque sorte, relayée.

On retrouve, ici encore, une répartition régulière des spires.

Les segments rectilignes axiaux assurent la transmission du mouvement de rotation du moteur aux différents ensembles en spirale.

0105997

Le procédé conforme à l'invention peut également être mis en oeuvre par un dispositif du genre décrit et représenté mais adapté au débouchage de conduites obturées accidentellement, notamment les tuyaux d'évacuation à l'égout des bâtiments d'habitation ou professionnels.

On sait, en effet, que l'on est parfois obligé de faire des brèches et de briser les conduits obturés lorsque l'on ne parvient pas mécaniquement à détruire le bouchon.

Pour atteindre ce but, on tente généralement d'atteindre le bouchon par le niveau inférieur au moyen de cannes plus ou moins flexibles et en donnant des coups sur le bouchon pour briser l'effet de voûte.

Outre que cette méthode est peu pratique elle conduit parfois à des accidents et toujours à des inconvénients.

Avec un dispositif conforme à l'invention, on peut introduire un conduit 1 souple de gros diamètre non plus par le niveau inférieur mais par le niveau supérieur du bouchon et l'on introduit de l'eau pour fluidifier les déchets que l'on aspire par le conduit 1 et que l'on évacue à partir de l'orifice de sortie 9 dans tout réceptacle voulu.

Pour la mise en oeuvre du procédé conforme à l'invention le dispositif doit obligatoirement comporter un moteur qui tourne à vitesse élevée et qui s'échauffe rapidement de sorte qu'un refroidissement efficace est nécessaire.

Pour cela, on prévoit que le capot 6 comporte une cheminée 6a ouverte vers l'extérieur et enserrant une partie extérieure 4a du moteur 4 correspondant au rotor.

Cette partie du moteur est ainsi mise au contact de l'air ambiant et n'atteint par conséquent pas de température excessive même si le moteur tourne pendant longtemps.

Pour refroidir l'extérieur du moteur 4, on prévoit des trous 5a dans le socle 5 et 6b dans le capot 6, la surface totale des trous 5a étant supérieure à la surface totale des trous 6b afin de créer un courant de ventilation ascendant pénétrant par les trous 5a et sortant par les trous 6b.

On évite de la sorte un confinement du moteur sous le capot 6 et ce dernier peut être réalisé en une matière synthétique quelconque dont on ne craint pas de déformation due à l'élévation de température. En outre, le moteur 4 convenablement ventilé par l'air circulant selon les flèches F, fonctionne dans des conditions satisfaisantes même pendant de longues durées.

L'invention trouve des applications particulièrement intéressantes pour la vidange de moteurs et de machines qui ne présentent pas de trou inférieur par lequel l'huile usée peut s'écouler par gravité lorsque l'on a retiré un bouchon d'obturation.

C'est, notamment, le cas des moteurs de bateaux, des machines-outils, des tondeuses à gazon, de certains moteurs de véhicules terrestres, etc...

Pour ces derniers, on considère que le conduit 1 doit avoir une longueur d'environ 60 cm et une flexibilité suffisante pour autoriser des angles de 60°.

Dans ces conditions, l'élément longitudinal 2 a également une longueur de 60 cm et subit des flexions alternées très éprouvantes 12.000 fois par minute.

Pour cette raison, on doit choisir des alliages de métaux adaptés à ce travail et l'on note que les frottements de l'élément longitudinal 2 contre la paroi interne du conduit 1 sont réduits au minimum possible puisque le fil qui constitue l'élément 2 est à section circulaire et ne présente par conséquent aucun angle vif.

Le mode de réalisation qui a été décrit ci-dessus et qui est représenté au dessin prévoit que l'élément longitudinal creux 2 est constitué par un fil conformé en spirale cylindrique.

Mais, pour certaines applications on peut utiliser un élément longitudinal creux de type différent et, notamment, un tube muni d'ailettes périphériques et traversé de trous radiaux, dès lors que l'on crée une dépression centrale longitudinale et orientée.

Un dispositif de ce type peut comprendre des anneaux mobiles qui créent l'effet voulu lorsque le tube est animé

0105997

d'un mouvement alternatif rapide dans le sens longitudinal du conduit et non plus selon une rotation continue comme cela a été décrit avec un élément longitudinal creux conformé en spirale.

## REVENDICATIONS

1 - Procédé pour le transfert de liquides par aspiration dans un conduit (1) contenant, au début de l'utilisation, de l'air à la pression atmosphérique, caractérisé en ce que l'on crée à l'intérieur du conduit (1) une force répartie sur toute sa longueur en vue de donner naissance à des dépressions élémentaires centrales tout le long du conduit (1) qui procurent une dépression résultante axiale continue et que l'on imprime un sens à cette dépression résultante pour qu'il s'ensuive un courant d'aspiration longitudinal central.

2 - Dispositif pour la mise en oeuvre du procédé selon la revendication 1, caractérisé en ce qu'il comprend un conduit (1) dans lequel s'étend un élément longitudinal creux (2) dont la partie centrale (15) est entièrement dégagée, qui est relié à un moteur de mise en mouvement (4) et qui comprend une pluralité d'organes répartis régulièrement sur toute sa longueur et aptes, lorsque l'élément (2) est en mouvement, à exercer sur l'air contenu dans le conduit (1), chacun à son niveau, une force devant se traduire, dans la partie centrale dégagée (15) de l'élément creux (2), par une dépression longitudinale orientée de l'extrémité du conduit (1) opposée au moteur (4) vers un orifice de sortie (9) proche dudit moteur (4).

3 - Dispositif selon la revendication 2, caractérisé en ce que l'élément longitudinal creux (2) a une longueur très sensiblement égale à celle du conduit (1) et un diamètre extérieur ($\beta$) plus petit que le diamètre intérieur ($\alpha$) du conduit (1) afin de ménager un espace annulaire (14) parallèle à la partie centrale dégagée (15).

4 - Dispositif selon la revendication 2, caractérisé en ce que le diamètre intérieur ($\alpha$) du conduit (1), les diamètres extérieur ($\beta$) et intérieur ($\gamma$) de l'élément (2) ainsi que la vitesse à laquelle ledit élément (2) doit être maintenu en mouvement sont liés par une relation procurant une dépression longitudinale dont la valeur est établie pour pouvoir élever un liquide donné, selon un débit significatif, depuis l'extrémité du conduit (1) opposée au moteur (4) jusqu'à l'orifice de sortie (9), alors que le conduit (1) est placé verticalement.

5 - Dispositif selon la revendication 4, caractérisé en ce que la relation est la suivante :
- diamètre intérieur du conduit ($\alpha$).......... 1
- diamètre extérieur de l'élément ($\beta$)........ 0,8 à 0,9
- diamètre intérieur de l'élément ($\gamma$)........ 0,5 à 0,62
- vitesse en cycles par minute................. 12.000 $\pm$ 6%
pour élever verticalement d'à peu près un mètre avec un débit d'environ 0,5 l par minute selon sa température un liquide de viscosité et de masse volumique du type des lubrifiants pour moteurs et machines.

6 - Dispositif selon la revendication 2, caractérisé en ce que l'élément longitudinal creux (2) est constitué par un fil à section circulaire conformé en spirale cylindrique dont les spires constituent chacune l'un des organes répartis règulièrement sur toute la longueur de cet élément (2), le mouvement du moteur (4) étant une rotation continue.

7 - Dispositif selon la revendication 6, caractérisé en ce que l'élément longitudinal creux conformé en spirale cylindrique comprend au moins deux ensembles séparés (200 à 204) mais reliés par un segment rectiligne axial ( 205 à 208).

8 - Dispositif selon la revendication 2, caractérisé en ce que devant être maintenu à un emplacement fixe par rapport à la capacité (A) contenant le liquide à transférer (D), il comporte un support (20) muni d'un premier organe (21) pour son assujetissement à la capacité (A) et d'un second organe (22) de soutien du dispositif, ce second organe (22) étant monté mobile par rapport au support (20) afin que la position du dispositif soit reglable, des moyens de tout type connu (23) étant prévus pour immobiliser ce second organe dans la position voulue.

0105997

9 - Dispositif selon la revendication 8, caractérisé en ce que le premier organe est constitué par une pince élastique (21) susceptible de coopérer avec une collerette co-axiale (B) d'un orifice (C) de la capacité (A) par lequel le conduit (1) du dispositif doit être introduit dans cette capacité (A).

10 - Dispositif selon la revendication 9, caractérisé en ce que la collerette est constituée par une extrémité (25a) d'un embout tubulaire indépendant (25) devant être engagé de manière amovible par son autre extrémité dans l'orifice (C) de la capacité (A).

0105997

FIG.1

2/3  0105997

FIG.2

FIG.3

FIG.7

FIG.4

0105997

FIG.5

FIG.6

Office européen
des brevets

## RAPPORT DE RECHERCHE EUROPEENNE

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-C- 621 096 (DEUTSCHE TECALEMIT GmbH) * Page 1, ligne 1- page 2, ligne 18; figure 1 * | 1,2,4, 6 | F 04 D 3/02 |
| A | US-A-3 880 548 (KIRBY) * Colonne 11, ligne 36 - colonne 12, ligne 46; figures 14-16 * | 1-3,6 | |
| A | RUSSIAN ENGINEERING JOURNAL, vol. 49, no. 5, 1969, pages 24-27 P.A. PREOBRAZHENSKII et al.: "Calculation and design of flexible screw conveyors" * Pages 24,25 * | 5 | |

DOMAINES TECHNIQUES
RECHERCHES (Int. Cl. ³)

F 04 D
B 65 G
F 01 M

Le présent rapport de recherche a été établi pour toutes les revendications

| Lieu de la recherche | Date d'achèvement de la recherche | Examinateur |
|---|---|---|
| LA HAYE | 19-07-1983 | WENZEL A.R. |